# EUROPEAN PATENT SPECIFICATION

(11) **EP 2 798 138 B1**
(45) Date of publication and mention of the grant of the patent: **14.09.2016**
(21) Application number: 12815657.7
(22) Date of filing: 17.12.2012
(51) Int. Cl.: E06B 9/88

(54) **ACTUATION DEVICE FOR MOVEMENT OF A BARRIER.**
BETÄTIGUNGSVORRICHTUNG ZUR BEWEGUNG EINER SPERRE
DISPOSITIF DE COMMANDE POUR LE MOUVEMENT D'UNE BARRIÈRE

(30) Priority: 28.12.2011 IT TV20110182
(43) Date of publication of application: 05.11.2014
(73) Proprietor: Nice S.p.A., 31046 Oderzo (Treviso) (IT)
(72) Inventor: MALAUSA, Andrea, I-31047 Ponte di Piave (TV) (IT); BORTOLAN, Bruno, I-31050 Ponzano Veneto (TV) (IT)
(74) Representative: De Bortoli, Eros
(86) International application number: PCT/EP2012/075739
(87) International publication number: WO 2013/098108

(56) References cited:
- EP-A1- 2 292 890
- EP-A2- 2 256 284

## Description

The present invention relates to an actuation device for movement of a barrier.

The use of actuation devices for automatic movement of barriers, such as blinds, shutters, main doors, gates or the like, is widely known.

Typically, these devices comprise a gear motor capable of operating a kinematic thrust mechanism, operatively connected to the barrier to be moved.

In general, these actuators are also provided with devices adapted to stop the gear motor, when the kinematic thrust mechanism of the actuator reaches one or more predefined end-of-travel positions, in such a manner as to be able to adjust the amplitude of movement of the barrier according to requirements.

The patent application EP568492 describes an actuation device for barriers comprising an end-of-travel device of mechanical type composed of a kinematic chain capable of counting the number of revolutions of the motor and interrupting the power supply of the same motor by means of a switch, when the number of revolutions exceeds a threshold.

Solutions of this type are generally very complex and costly to produce at industrial level. The patent application WO2006/120115 also describes an actuation device for barriers comprising an end-of-travel device of mechanical type.

This device is composed of a pair of sliders slidable along respective threaded bars and capable of operating a microswitch adapted to interrupt the power supply of the gear motor. Although offering some advantages with respect to the solution illustrated previously, the device in question is nonetheless characterized by a relatively complex structure with some significant critical points in terms of industrial production.

In other prior art actuation devices for barriers, the end-of-travel positions of the gear motor are determined using members of electronic type, typically an encoder of magnetic type operatively associated with the control unit of the gear motor, see., e.g. EP 2256284 and EP 2292890.

To detect and memorize an end-of-travel position, the installer performs a set-up procedure, during which the gear motor is started with an operating mode commonly called "hold-to-run" mode, i.e. pressing and holding an activation key.

During the set-up procedure, the encoder memorizes the number of revolutions performed by the gear motor before the barrier reaches a required position.

The control unit uses these data (end-of-travel position) to regulate the operation of the gear motor during free actuation thereof.

Unfortunately, in the solutions of the type described above, currently available, the set-up procedures to be performed are laborious and not particularly intuitive and often require consultation of instruction manuals.

Relatively lengthy installation times are therefore required for these actuation devices.

In practice, it has been seen that this drawback, already problematic, leads many installers to advise the client to install actuation devices equipped with purely mechanical members for determining the end-of-travel positions of the gear motor.

The main aim of the present invention is to provide an actuation device for movement of a barrier that enables the problems mentioned above to be solved.

Within this aim, an object of the present invention is to provide an actuation device having an overall structure that is relatively simple and has a limited size.

A further object of the present invention is to provide an actuation device that is relatively simple to install.

A further object of the present invention is to provide an actuation device that is easy to produce at industrial level, at competitive costs.

This aim, and said and other objects which will be more apparent below, are achieved by an actuation device for movement of a barrier, according to the following claim 1 and the related dependent claims.

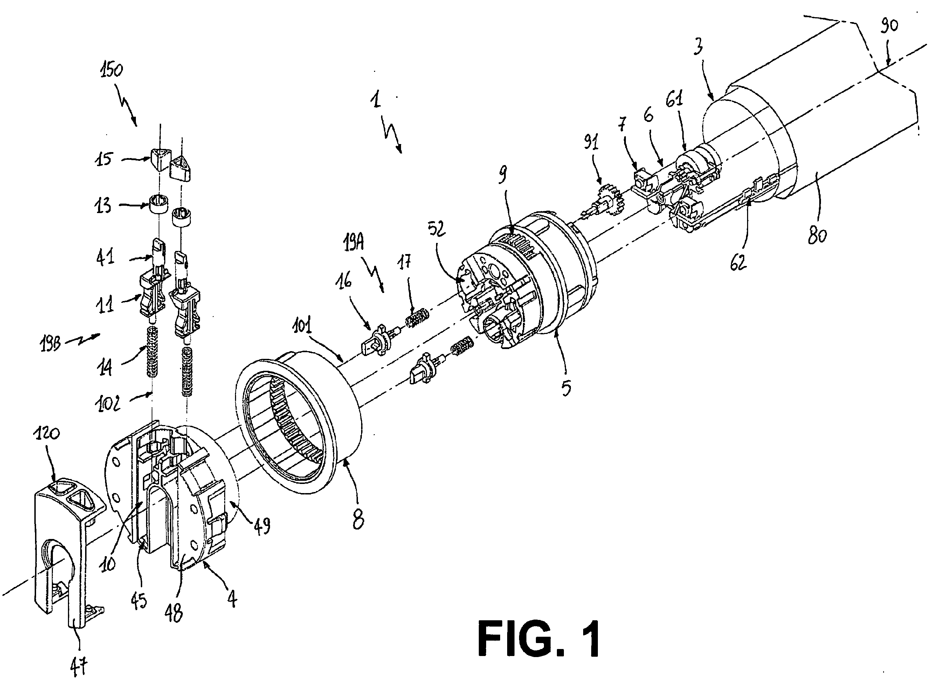

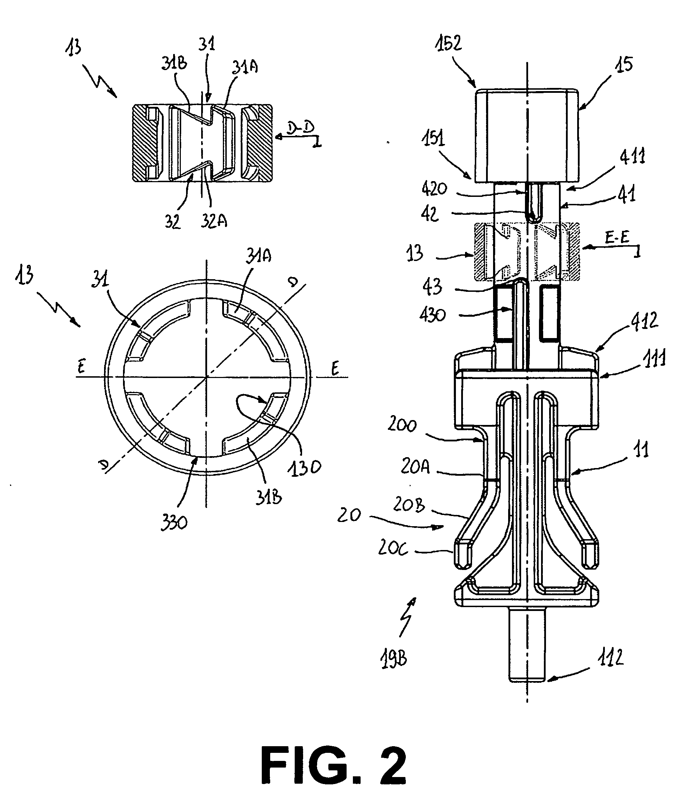

Further characteristics and advantages of the present invention will be more apparent from the description of preferred, but not exclusive embodiments of the actuation device according to the invention, illustrated by way of non-limiting example in the accompanying drawings, wherein Figs. 1-3 partially and schematically illustrate some exploded and sectional views of a portion of the actuation device according to the present invention.

With reference to the aforesaid figures, the present invention relates to an actuation device 1 for movement of a barrier (not illustrated).

The actuation device 1 is particularly suitable for operating roller barriers, such as a blind, a shutter or the like and will be described, for simplicity, with reference to this type of use. However, this is not intended to limit the scope of the present invention.

The actuation device I can be used, without significant changes in construction, also for operation of barriers of different type, such as main doors, gates or the like.

The actuation device 1 comprises a gear motor (not illustrated) of tubular type, advantageously housed inside a tubular casing 3, which is capable of being integrally connected with a fixed support (not illustrated) when the actuation device 1 is operatively installed.

The gear motor can be of conventional type and can advantageously be associated with other accessory members of known type, also positioned inside the tubular casing 3.

When said actuation device 1 is operatively installed, the gear motor is adapted to transmit a rotary motion to a tubular support 80, which is integrally connected to the barrier to be operated and rotating with respect to the fixed support, about an axis of rotation 90.

In the case in which the barrier to be operated is a roller barrier, the tubular support 80 can advantageously be composed, as illustrated in Fig. 1, of a roller tube, coaxial with the tubular casing 3 and positioned outside this latter.

In the case in which the barrier to be operated is a gate or main door, the tubular support 80 can be composed of an upright to support this latter or of other parts of the automation system and/or of the gate.

The actuation device 1 comprises a head portion 4, which is integrally connectable to the fixed support, when said actuation device 1 is operatively installed.

The head portion 4 is also operatively coupleable to the tubular support 80, when said actuation device 1 is operatively installed, in such a manner that the tubolar support 80 is rotatingly associated and substantially coaxial with said head portion along the axis of rotation 90.

For this purpose, a crown wheel 8, integrally connected to the tubular support 80, is rotatingly associated with a connection sleeve 49 of the head portion 4.

Preferably, the actuation device 1 also comprises a supporting portion 5, integrally connected to the head portion 4 and operatively coupled to the tubular casing 3 in such a manner as to be integral with this latter.

The actuation device 1 comprises a control unit 6 adapted to regulate operation of the gear motor.

Preferably, the control unit 6 is arranged on an electronic board housed inside the tubular casing 3 and advantageously fastened to the supporting portion 5.

The control unit 6 comprises a measuring device 61 for measuring the number of revolutions performed by the gear motor, for example an encoder of magnetic type.

Advantageously, when said actuation device 1 is operatively installed, the measuring device 61 is capable of being operatively associated with the tubular support 80, preferably by means of motion transmission members 9, 91, housed in the supporting portion 5 and operatively coupled with the crown wheel 8.

The control unit 6 also comprises a control device 62 of the gear motor, operatively associated with the measuring device 61 in such a manner as to receive, from this latter, detection signals indicating the number of revolutions performed by the same gear motor.

The control unit 6 also comprises at least one microswitch 7, preferably a pair of microswitches, as will be seen in more detail below.

Said at least one microswitch 7 is adapted to command the control device 62 to execute a detection procedure of at least one end-of-travel position for the gear motor.

The term "detection procedure" is intended, within the context of the present invention, as a procedure in which the control device 62 performs a series of software instructions or the like to acquire and memorize data indicative of a position reached by the gear motor.

Each microswitch 7 is adapted to command the control device 62 (by means of suitable control signals) to start or stop the aforesaid detection procedure.

Advantageously, each microswitch 7 is also adapted to command the control device 62 to memorize the end-of-travel position detected by means of this detection procedure, when this latter is terminated.

As mentioned above, and as will be evident from Fig. 1, the actuation device 1 has an overall structure of tubular type in which the head portion 4, the supporting portion 5, the tubular casing 3, the control unit 6 and the gear motor are advantageously housed, at least partly, in the internal volume defined by the tubular support 80, when said actuation device 1 is oepratively installed.

According to the invention, the actuation device 1 comprises actuation means 150 for mechanically actuating the microswitch 7.

The actuation means 150 are manually operable by a user and adapted to mechanically actuate the microswitch 7.

Preferably, the actuation means 150 are arranged, so as to be operable by a same actuation movement of the user (in particular an actuation movement of the pushing type).

In particular, the actuation means 150 are reversibly movable between a position A decoupled from, and a position B coupled with, the microswitch 7.

In a preferred embodiment of the present invention, the microswitch 7 is operatively associated with the control device 62 of the gear motor in such a manner as to implement a control logic consisting of the following steps:
- when the actuation means 150 pass from the position A decoupled from, to the position B coupled with, the microswitch 7, this latter sends a control signal to the control device 62 to start a detection procedure of an end-of-travel position for the gear motor;
- when the actuation means 150 pass from the position B coupled with, to the position A decoupled from, the microswitch 7, this latter sends a control signal to the control device 62 to stop this detection procedure and memorize the end-of-travel position detected by means of said detection procedure.

In alternative embodiments of the present invention, the microswitch 7 could be operatively associated with the control device 62 in such a manner as to implement control logics of a different type to those illustrated above.

The structure of the actuation means 150 will now be described in greater detail.

Preferably, the actuation means 150 are housed at least partly in the head portion 4, preferably in a specific seat 10 produced in the shaped body 48 of the aforesaid head portion 4.

The seat 10 is delimited externally by a removable cover 47, operatively associated with the shaped body 48 in such a manner as to enable mounting of the actuation means 150 during industrial manufacture of the actuation device 1.

Preferably, the actuation means 150 comprise a first and second actuation element 19A, 19B reversibly movable along a first and second axis of movement 101, 102.

Preferably, the axes of movement 101, 102 are substantially perpendicular to each other. Preferably, the axis of movement 101 is substantially parallel to the axis of rotation 90 while the axis of movement 102 is substantially perpendicular to this latter.

Preferably, the first actuation element 19A is reversibly movable along the first axis of movement 101, between a position A1 decoupled from, and a position B1 coupled with, the microswitch 7.

In the coupled position B1, the first actuation element 19A exerts a force on the microswitch 7 to determine operation thereof.

Preferably, the first actuation element 19A is at least partly housed in a seat 52 produced in the supporting portion 5 of the actuation device.

Preferably, the second actuation element 19B is manually operable by the user and comprises a coupling surface 20 with the first actuation element 19A.

Preferably, the second actuation element 19B is reversibly movable along the second axis of movement 102, between a position A2 decoupled from, and a position B2 coupled with, the first actuation element 19A.

In the coupled position B2, the second actuation element 19B exerts a force on the first actuation element 19A, which takes this latter to the position B1 coupled with the microswitch 7.

Preferably, the actuation means 150 also comprise a locking element 13 comprising one or more locking surfaces 31A, 31B, 32 couplable with the second actuation element 19B.

As will be more apparent below, the locking element 13 is preferably slidingly associated with the second actuation element 19B.

Advantageously, it is freely rotatable about the axis of movement 102 and in fixed position with respect to the second actuation element 19B.

Moreover, the locking surfaces 31A, 31B, 32 are advantageously arranged in such a manner that the locking element 13 is capable of locking the second actuation element 19B in the decoupled position A2.

Preferably, the second actuation element 19B and the locking element 13 are housed at least partly in the seat 10 produced in the head portion 4 of the gear motor.

Preferably, the first actuation element 19A comprises a pusher 16, having a shaped body that extends substantially along the axis of movement 101.

Preferably, the pusher 16 comprises a first end 161, proximal to the microswitch 7, and a second end 162, opposite with respect to the first end 161 and therefore in distal position with respect to the microswitch 7.

The pusher 16 comprises, in proximity of the end 161, a first coupling surface 160 with the microswitch 7, intended to come into contact therewith.

The pusher 16 comprises, in proximity of the end 162, a second coupling surface 21 with the second actuation element 19B.

Preferably, the coupling surface 21 is the surface of a shaped protrusion 21A that protrudes laterally, at least partly, from the body of the pusher 16, in proximity of the end 162 thereof. Preferably, the first actuation element 19A comprises first elastic means 17, for example a spring, operatively associated with the pusher 16, in proximity of the first end 161. Advantageously, the elastic means 17 are arranged in such a manner as to oppose movement of the pusher 16 toward the microswitch 7.

Preferably, the second actuation element 19B comprises a slider 11 having a shaped body that extends substantially along the axis of movement 102 between a third end 111 and a fourth end 112, opposite said third end.

The ends 111, 112 of the slider 11 are respectively in distal and proximal position with respect to a first wall 45 of the head portion 4, which advantageously forms a bottom wall of the seat 10 that houses, at least partly, the actuation means 150.

Preferably, the slider 11 comprises a third coupling surface 20 with the first actuation element 19A.

The coupling surface 20 is advantageously in an intermediate position between the ends 111, 112 of the slider 11.

Preferably, the coupling surface 20 is the outer surface of a wing 200 that protrudes laterally from the body of the slider.

A first section 20A of the coupling surface 20 has a profile that extends substantially along a direction parallel to the axis of movement 102.

A second section 20B of the coupling surface 20 has a profile inclined toward the outside of the body of the slider 11, in the direction of the actuation element 19A.

A third section 20C of the coupling surface 20 is substantially parallel to the first section 20A thereof, although positioned further toward the outside with respect to this latter.

Preferably, the second actuation element 19B comprises second elastic means 14, for example a spring, operatively associated with the slider 11, in proximity of the second end 112. Advantageously, the elastic means 14 are arranged in such a manner as to oppose movement of the slider 11 toward the wall 45 of the head portion 4.

Preferably, the second actuation element 19B comprises a rod 41 composed of a shaped body that extends substantially along the axis of movement 102, coaxial with the slider 11.

The rod 41 comprises a fifth end 411 and a sixth end 412, in a position opposite the end 411. The ends 411, 412 of the rod 41 are respectively in distal and proximal position with respect to the slider 11.

Advantageously, at the end 412, the rod 41 is integrally connected with the end 111 of the slider 11.

Preferably, the rod 41 comprises the profiles 420 and 430, respectively in distal and proximal position with respect to the slider 11.

The profiles 420 and 430 are shaped in relief with respect to the body of the rod 41 and extend, in a substantially rectilinear manner, according to directions parallel to the axis of movement 102.

The profiles 420 and 430 are arranged in such a manner as to be angularly staggered with respect to each other, taking as reference the axis of movement 102.

Preferably, the rod 41 comprises two pairs of profiles 420, 430, in angularly opposite positions, with respect to each other.

The surfaces of the profiles 420 and 430 respectively form at least a first and sixth coupling surface 42, 43 couplable with the locking element 13, arranged in intermediate position between the ends 411 and 412 of the rod 41.

Preferably, the second actuation element 19B comprises a push button 15 composed of a shaped body that extends substantially along the axis of movement 102, coaxial with the rod 41 and the slider 11.

The push button 15 comprises a seventh end 151, in position proximal with respect to the rod 41 and integrally connected to the end 411 of this latter.

The push button 15 comprises an eighth end 152, in distal position with respect to the rod 41. The end 152 can be pressed manually by a user.

Preferably, the push button 15 is housed at least partly in a through hole 120 produced in the cover 12 of the head portion 4.

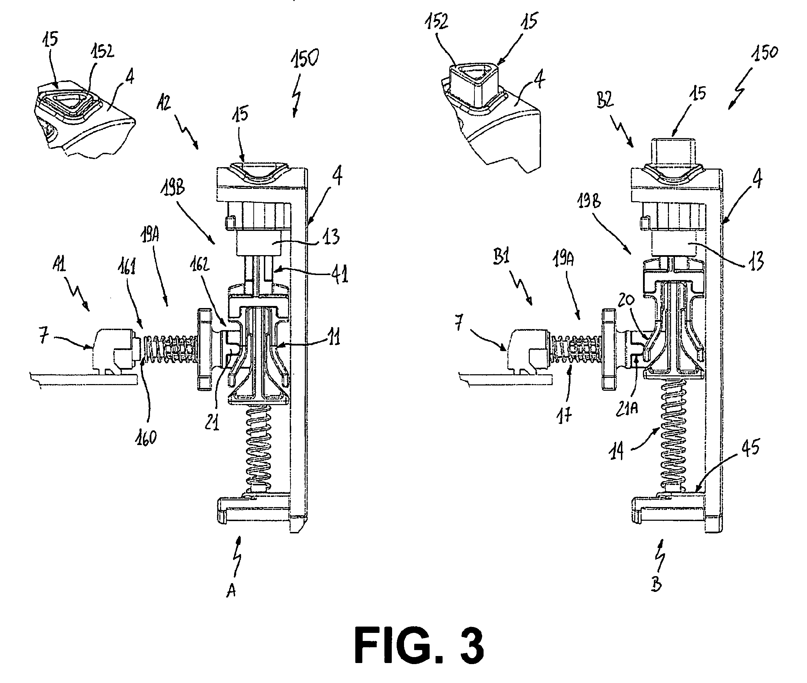

As will be more apparent below, the push button 15 protrudes from the head portion 4, when the second actuation element 19B is in the position B2, coupled with the first actuation element 19A (Fig. 3).

The end 152 of the push button 15 is instead substantially flush with the outer surface of the head portion 4, when the second actuation element 19B is in the position A2, decoupled from the first actuation element 19A (Fig. 3).

Preferably, the locking element 13 is ring shaped and is operatively associated with one or more walls (not illustrated) of the head portion 4, in such a manner as to be freely rotatable about the axis of movement 102 and in vertically fixed position (i.e. along the axis 102) with respect to the second actuation element 19B.

In other words, the locking element 13 is arranged in such a manner as to be free to rotate about the axis of movement 102 but unable to translate along this latter.

The locking element 13 is slidingly associated with the rod 41 in an intermediate position between the coupling surfaces 42, 43 of this latter, in other words in the region of the rod 41 comprised between the profiles 420 and 430.

Preferably, the inner surface 130 of the locking ring 13 is shaped in such a manner as to have one or more consecutive grooves 32, in position proximal to the rib profiles 430, and one or more consecutive grooves 31, in position proximal to the profiles 420.

Between each pair of consecutive grooves 31, 32, the inner surface 130 comprises one or more separation areas 330, substantially flat and oriented parallel to the axis of movement 102.

The surfaces 32A of the grooves 32 form at least a seventh locking surface couplable with the sixth coupling surface 43 of the rod 41.

The surfaces 31A, 31B of the grooves 31 form at least an eighth locking surface couplable with the fifth coupling surface 42 of the rod 41.

Operation of the actuation means 150 will now be described in greater detail.

At rest, the actuation means 150 are in the position A decoupled from the microswitch 7 (Fig. 3).

In this situation:
- the first actuation element 19A is in the position A1 decoupled from the microswitch 7. The coupling surface 160 of the pusher 16 is separated from the microswitch 7;
- the second actuation element 19B is in the position A2 decoupled from the first actuation element 19A. The protrusion 21A of the pusher 16 is simply resting on the first section 20A of the coupling surface 20 of the slider 11, without this latter exerting any force on the pusher 16;
- the elastic means 14 are compressed against the wall 45 of the head portion 4;
- the profiles 430 of the rod 41 are inserted in the grooves 32 of the locking element 13. In this way, the locking element 13 maintains the second actuation element 19B locked in the decoupled position A2, opposing the thrust exerted by the elastic means 14, in distal direction from the wall 45;
- the push button 15 does not protrude from the head portion 4.

To take the actuation means 150 to the coupled position B, the user presses the push button 15.

When the user presses the push button 15, the profiles 420 of the rod 41 slide on the surfaces 31A of the grooves 31, causing a rotation of the locking ring 13.

This rotation decouples the profiles 430 of the rod 41 from the grooves 32 of the locking element 13, aligning them with the intermediate areas 330 of the inner surface 130.

The rod 41 is thus released from the locking element 13 and, due to the thrust exerted by the elastic means 14, the actuation element 19B, and therefore the assembly composed of the slider 11, the rod 41 and the push button 15, can move freely along the axis 102 in distal direction from the wall 45, to the coupled position B2.

During this movement, the inclined section 20B of the coupling surface 20 interacts with the protrusion 21A of the pusher 16.

The slider 11 thus exerts a force on the pusher 16, pushing it toward the microswitch 7 and taking the coupling surface 160 into contact with the same microswitch (coupled position B1). At this point, the actuation means 150 are in the position B coupled with the microswitch 7 (Fig. 3).

In this situation:
- the first actuation element 19A is in the position B1 coupled with the microswitch 7. The coupling surface 160 of the pusher 16 is in contact with the microswitch 7;
- the elastic means 17 are compressed against the microswitch 7;
- the second actuation element 19B is in the position B2 coupled with the first actuation element 19A. The protrusion 21A of the pusher 16 is resting on the section 20C of the coupling surface 20 of the slider 11, which continues to exert a force on the pusher 16 in such a manner as to maintain the coupling surface of this latter in contact with the microswitch 7;
- the elastic means 14 are no longer compressed against the wall 45 of the head portion 4 and maintain the second actuation element 19B in the coupled position B2;
- the profiles 430 of the rod 41 are positioned in the intermediate areas 330 of the inner surface 130 of the locking element 13;
- the push button 15 protrudes from the head portion 4.

To return the actuation means 150 to the decoupled position A, the user presses the push button 15.

When the user presses the push button 15 once again, this causes the actuation element 19B, and therefore the assembly composed of the slider 11, the rod 41 and the push button 15, to move along the axis 102 toward the bottom wall 45 of the head portion 4, compressing the elastic means 14.

During this movement, the profiles 420 of the rod 41 slide on the surfaces 31B of the grooves 31, causing a further rotation (in the same direction as the previous one) of the locking element 13.

This rotation once again aligns the profiles 430 of the rod 41 with the grooves 32 of the locking element 13.

Moreover, during movement of the actuation element 19B, the coupling surface 20 of the slider 11 slides in the direction of the bottom wall 45 and interrupts the thrust against the protrusion 21A of the pusher 16.

The slider 11 thus ceases to exert a force on the pusher 16.

The elastic means 17 are thus free to move the pusher 16 away from the microswitch 7.

The coupling surface 160 of the pusher 16 is thus separated from the microswitch 7 (decoupled position A1 of the actuation element 19A).

When the push button 15 is released by the user, the elastic means 17 tend once again to thrust the actuation element 19B in distal direction from the bottom wall 45.

The profiles 430 of the rod 41 are inserted in the grooves 32 of the locking element 13. In this way, the locking element 13 once again locks the second actuation element 19B in the decoupled position A2, opposing the thrust exerted by the elastic means 17.

The actuation means 150 thus return to the position A decoupled from the microswitch 7. The actuation means 150 enable the user to perform a simple set-up procedure of the actuation device 1, during which an end-of-travel position for the gear motor is detected and memorized.

To perform this set-up procedure, starting from a rest situation, the user presses the push button 15 and starts the gear motor of the actuation device 1, according to a "hold to run" mode (start push button of the gear motor pressed and held).

The actuation means 150, starting from the decoupled position A, are taken to the position B coupled with the microswitch 7.

When pressed by the coupling surface 160 of the pusher 16, the microswitch 7 sends a control signal to the control device 62 to start a detection procedure of an end-of-travel position for the gear motor.

During this detection procedure, the measuring device 61 transmits signals indicating the number of revolutions performed by the gear motor to the control device.

The user continues to maintain the gear motor of the actuation device 1 activated until the barrier reaches the required position.

When the barrier reaches the required position, the user stops the gear motor and presses the push button 15 once again.

The actuation means 150, starting from the coupled position B, return to the position A decoupled from the microswitch 7.

When the microswitch 7 separates from the coupling surface 160 of the pusher 16, it sends a control signal to the control device 62 to stop the detection procedure in progress and memorize the end-of-travel position detected for the gear motor.

From the above, it is evident how the actuation means 150, in association with the microswitch 7 and the control device of the microswitch, form an electromechanical end-of-travel device adapted to detect and memorize an end-of-travel position for the gear motor of the actuation device 1.

Preferably, as illustrated in Fig. 1, the actuation device 1 is arranged in such a manner as to comprise a pair of electromechanical end-of-travel devices, of the type illustrated, respectively dedicated to detecting and memorizing respectively a first end-of-travel position, for example during the opening step of the barrier, and a second end-of-travel position, for example during the closing step of the barrier.

Therefore, in a preferred embodiment of the present invention, the actuation device 1 comprises first and second actuation means, manually operable by a user and reversibly movable between a position A decoupled from, and a position B coupled with, a first and second microswitch 7, adapted to command the control device of the gear motor to start/stop a first and second detection procedure of a first and second end-of-travel position for said gear motor, respectively.

Preferably, the structure and operation of the first actuation means and the second actuation means are identical to those illustrated above for the actuation means 150.

Advantageously, it is possible to use both the above-mentioned electromechanical end-of-travel devices to detect and memorize an intermediate position of the gear motor, comprised between two previously memorized end-of-travel positions.

This set-up procedure (substantially analogous to the one described previously) provides for simultaneous actuation (advantageously with a same actuation movement as illustrated above) of the push buttons 15 of the actuation means 150 of both electromechanical end-of-travel devices, positioning of the gear motor (or of the barrier) in the required position between the two previously memorized end-of-travel positions, release of both push buttons 15 and related memorizing of the intermediate position reached by the barrier.

In practice, it has been seen how the actuation device 1 according to the present invention enables the intended aim and objects to be achieved.

The actuation device 1 allows detection and memorizing of an end-of-travel position with a very simple and intuitive set-up procedure that enables a noteworthy decrease in the installation and set-up times of the barrier.

The actuation device 1 is characterized by very easy and practical use. The installer can check visually (and therefore rapidly and conveniently) if the end-of-travel positions have been memorized or if the detection procedure is in progress. For this purpose, it is sufficient to observe the position of the push buttons 15 (protruding or not protruding from the head portion 4).

The overall structure of the actuation device 1 has is relatively simple, has limited overall dimensions, and is easy to install.

The actuation device 1 has a substantially modular structure, relatively simple and inexpensive to manufacture and to assemble at industrial level.

## Claims

1. An actuation device (1) for movement of a barrier, comprising:
- a gear motor, which is capable of transmitting a rotary motion to a tubular support (80);
- a head portion (4), which is capable of being integrally connected to a fixed support, so that said tubolar support (80) is rotatingly associated and substantially coaxial with said head portion about an axis of rotation (90);
- a control unit (6) comprising a measuring device (61) for measuring the number of revolutions performed by said gear motor, a control device (62) of said gear motor and at least one microswitch (7) adapted to command said control device to start/stop a detection procedure of an end-of-travel position for said gear motor;
- actuation means (150) that are manually operable by a user in order to mechanically actuate said microswitch (7), said actuation means being reversibly movable between a position (A) decoupled from, and a position (B) coupled with, said microswitch (7);
**characterized in that** said actuation means (150) comprise a first and second actuation element (19A, 19B),
wherein said first actuation element (19A) is reversibly movable along a first axis of movement (101), between a position (A1) decoupled from, and a position (B1) coupled with, said microswitch (7),
wherein said second actuation element (19B) is manually operable by the user and is reversibly movable along a second axis of movement (102), between a position (A2) decoupled from, and a position (B2) coupled with, said first actuation element (19A).

2. The actuation device according to claim 1, **characterized in that**:
when said actuation means (150) pass from said position (A) decoupled from, to said position (B) coupled with, said microswitch (7), said microswitch sends a control signal to said control device (62) to start a detection procedure of an end-of-travel position for said gear motor,
and **in that**
when said actuation means (150) pass from said position (B) coupled with, to said position (A) decoupled from, said microswitch (7), said microswitch sends a control signal to said control device (62) to stop said detection procedure and memorize the end-of-travel position detected by means of said detection procedure.

3. The actuation device according to one or more of the preceding claims, **characterized in that** said actuation means (150) are housed at least partly in said head portion (4).

4. The actuation device according to one or more of the preceding claims, **characterized in that** said second actuation element (19B) comprises a coupling surface (21) with said first actuation element (19A), said actuation means comprising a locking element (13) having a locking surface (31A, 31B, 32A) couplable with said second actuation element (19B).

5. The actuation device according to claim 4, **characterized in that** said first and second actuation element (19A, 19B) are reversibly movable along axes of movement (101, 102) substantially perpendicular to each other.

6. The actuation device, according to one or more of claims 4 to 5, **characterized in that** said first actuation element (19A) comprises:
- a pusher (16) comprising a first coupling surface (160) with said microswitch (7) and a second coupling surface (21) with said second actuation element (19B);
- first elastic means (17) operatively associated with said pusher.

7. The actuation device according to one or more of claims 4 to 6, **characterized in that** said second actuation element (19B) comprises:
- a slider (11) comprising a third coupling surface (20) with said first actuation element (19A);
- second elastic means (14) operatively associated with said slider;
- a rod (41) comprising a fifth and sixth coupling surface (42, 43) with said locking element (13), said rod being integrally connected with said slider;
- a push button (15) integrally connected with said rod and manually operable by a user.

8. The actuation device according to one or more of claims 4 to 7, **characterized in that** said locking element (13) is slidingly associated with said second actuation element (19B), said locking element being freely rotatable about said second axis of movement (102) and in fixed position with respect to said second actuation element (19B).

9. The actuation device according to claims 7 and 8, **characterized in that** said locking element (13) comprises a seventh locking surface (32A), couplable with the sixth coupling surface (43) of said rod (41), and an eighth locking surface (31A, 31B), couplable with the fifth coupling surface (42) of said rod.

10. The actuation device according to one or more of claims 7 to 9, **characterized in that** said push button (15) protrudes from said head portion (4), when said second actuation element (19B) is in said coupled position (B2).

11. A barrier **characterized in that** it comprises an actuation device (1) according to one or more of the preceding claims.

## Patentansprüche

1. Betätigungsvorrichtung (1) zum Bewegen einer Barriere, aufweisend:
- einen Getriebemotor, der in der Lage ist, eine drehende Bewegung an einen röhrenförmigen Träger (80) zu übertragen;
- einen Kopfabschnitt (4), der in der Lage ist, einstückig mit einem festen Träger verbunden zu werden, so dass der röhrenförmige Träger (80) drehend dem Kopfabschnitt um eine Drehachse (90) zugeordnet und im Wesentlichen koaxial zu diesem ist;
- eine Steuereinheit (6), aufweisend eine Messvorrichtung (61) zum Messen der Anzahl an Umdrehungen des Getriebemotors, eine Steuervorrichtung (62) des Getriebemotors und zumindest einen Mikroschalter (7), der darauf ausgelegt ist, die Steuervorrichtung zu steuern, um einen Erfassungsvorgang einer Endlagenposition für den Getriebemotor zu starten / zu stoppen;
- Betätigungseinrichtungen (150), die manuell durch einen Benutzer bedienbar sind, um den Mikroschalter (7) mechanisch zu betätigen, wobei die Betätigungseinrichtungen umkehrbar zwischen einer Position (A), in der sie von dem Mikroschalter (7) entkoppelt sind, und einer Position (B), in der sie mit dem Mikroschalter (7) gekoppelt sind, bewegt werden können;
**dadurch gekennzeichnet, dass** die Betätigungseinrichtungen (150) ein erstes und ein zweites Betätigungselement (19A, 19B) aufweisen,
wobei das erste Betätigungselement (19A) umkehrbar entlang einer ersten Bewegungsachse (101) zwischen einer Position (A1), in der es von dem Mikroschalter (7) entkoppelt ist, und einer Position (B1), in der es mit dem Mikroschalter (7) gekoppelt ist, bewegt werden kann,
wobei das zweite Betätigungselement (19B) manuell durch den Benutzer bedienbar ist und umkehrbar entlang einer zweiten Bewegungsachse (102) zwischen einer Position (A2), in der es von dem ersten Betätigungselement (19A) entkoppelt ist, und einer Position (B2), in der es mit dem ersten Betätigungselement (19A) gekoppelt ist, bewegt werden kann.

2. Betätigungsvorrichtung nach Anspruch 1, **dadurch gekennzeichnet, dass**:
wenn die Betätigungseinrichtungen (150) von der Position (A), in der sie von dem Mikroschalter (7) entkoppelt sind, zu der Position (B), in der sie mit dem Mikroschalter (7) gekoppelt sind, übergehen, der Mikroschalter (7) ein Steuersignal an die Steuervorrichtung (62) sendet, um einen Erfassungsvorgang einer Endlagenposition für den Getriebemotor zu starten,
und dadurch, dass
wenn die Betätigungseinrichtungen (150) von der Position (B), in der sie mit dem Mikroschalter (7) gekoppelt sind, zu der Position (A), in der sie von dem Mikroschalter (7) entkoppelt sind, übergehen, der Mikroschalter ein Steuersignal an die Steuervorrichtung (62) sendet, um den Erfassungsvorgang zu stoppen und die Endlagenposition zu speichern, die durch den Erfassungsvorgang erfasst wurde.

3. Betätigungsvorrichtung nach einem oder mehreren der vorgenannten Ansprüche, **dadurch gekennzeichnet, dass** sich die Betätigungseinrichtungen (150) zumindest teilweise in dem Kopfabschnitt (4) befinden.

4. Betätigungsvorrichtung nach einem oder mehreren der vorgenannten Ansprüche, **dadurch gekennzeichnet, dass** das zweite Betätigungselement (19B) eine Koppelfläche (21) mit dem ersten Betätigungselement (19A) aufweist, wobei die Betätigungseinrichtungen ein Sperrelement (13) mit einer Sperrfläche (31A, 31B, 32A) aufweist, das mit dem zweiten Betätigungselement (19B) gekoppelt werden kann.

5. Betätigungsvorrichtung nach Anspruch 4, **dadurch gekennzeichnet, dass** das erste und zweite Betätigungselement (19A, 19B) umkehrbar entlang von Bewegungsachsen (101, 102) bewegt werden können, die im Wesentlichen rechtwinklig zueinander sind.

6. Betätigungsvorrichtung nach einem oder mehreren der Ansprüche 4 bis 5, **dadurch gekennzeichnet, dass** das erste Betätigungselement (19A) aufweist:
- einen Drücker (16), der eine erste Kopplungsfläche (160) mit dem Mikroschalter (7) und eine zweite Kopplungsfläche (21) mit dem zweiten Betätigungselement (19B) aufweist;
- eine erste elastische Einrichtung (17), die dem Drücker operativ zugeordnet ist.

7. Betätigungsvorrichtung nach einem oder mehreren der Ansprüche 4 bis 6, **dadurch gekennzeichnet, dass** das zweite Betätigungselement (19B) aufweist:
- einen Gleiter (11), der eine dritte Kopplungsfläche (20) mit dem ersten Betätigungselement (19A) aufweist;
- eine zweite elastische Einrichtung (14), die dem Gleiter operativ zugeordnet ist;
- eine Stange (41), die eine fünfte und sechste Kopplungsfläche (42, 43) mit dem Sperrelement (13) aufweist, wobei die Stange einstückig mit dem Gleiter verbunden ist;
- einen Druckknopf (15), der einstückig mit der Stange verbunden ist und manuell durch einen Benutzer bedient werden kann.

8. Betätigungsvorrichtung nach einem oder mehreren der Ansprüche 4 bis 7, **dadurch gekennzeichnet, dass** das Sperrelement (13) gleitend dem zweiten Betätigungselement (19B) zugeordnet ist, wobei das Sperrelement frei um die zweite Bewegungsachse (102) drehbar ist und sich in einer festen Position im Verhältnis zu dem zweiten Betätigungselement (19B) befindet.

9. Betätigungsvorrichtung nach Anspruch 7 und 8, **dadurch gekennzeichnet, dass** das Sperrelement (13) eine siebente Sperrfläche (32A), die mit der sechsten Sperrfläche (43) der Stange (41) gekoppelt werden kann, und eine achte Sperrfläche (31A, 31B), die mit der fünften Sperrfläche (42) der Stange gekoppelt werden kann, aufweist.

10. Betätigungsvorrichtung nach einem oder mehreren der Ansprüche 7 bis 9, **dadurch gekennzeichnet, dass** der Druckknopf (15) von dem Kopfabschnitt (4) aus hervorragt, wenn sich das zweite Betätigungselement (19B) in der gekoppelten Position (B2) befindet.

11. Barriere, **dadurch gekennzeichnet, dass** sie eine Betätigungsvorrichtung (1) nach eine oder mehreren der vorgenannten Ansprüche aufweist.

## Revendications

1. Dispositif d'actionnement (1) pour le mouvement d'une barrière, comprenant :
- un motoréducteur qui est capable de transmettre un mouvement de rotation à un support tubulaire (80) ;
- une partie de tête (4) qui est capable d'être raccordée de manière solidaire à un support fixe, de sorte que ledit support tubulaire (80) est associé, en rotation et de manière sensiblement coaxiale, à ladite partie de tête autour d'un axe de rotation (90) ;
- une unité de commande (6) comprenant un dispositif de mesure (61) pour mesurer le nombre de révolutions réalisées par ledit motoréducteur, un dispositif de commande (62) dudit motoréducteur et au moins un micro-commutateur (7) adapté pour commander ledit dispositif de commande afin de déclencher/arrêter une procédure de détection d'une position de fin de course pour ledit motoréducteur ;
- des moyens d'actionnement (150) qui peuvent être actionnés manuellement par un utilisateur afin d'actionner mécaniquement ledit micro-commutateur (7), lesdits moyens d'actionnement étant mobiles de manière réversible entre une position (A) découplée de, et une position (B) couplée avec ledit micro-commutateur (7) ;
**caractérisé en ce que** lesdits moyens d'actionnement (150) comprennent des premier et second éléments d'actionnement (19A, 19B),
dans lequel ledit premier élément d'actionnement (19A) est mobile de manière réversible le long d'un premier axe de mouvement (101), entre une position (A1) découplée de, et une position (B1) couplée avec ledit micro-commutateur (7),
dans lequel ledit second élément d'actionnement (19B) peut être actionné manuellement par l'utilisateur et est mobile, de manière réversible, le long d'un second axe de mouvement (102) entre une position (A2) découplée de, et une position (B2) couplée avec ledit premier élément d'actionnement (19A).

2. Dispositif d'actionnement selon la revendication 1, **caractérisé en ce que** :
lorsque lesdits moyens d'actionnement (150) passent de ladite position (A) découplée de, à ladite position (B) couplée avec ledit micro-commutateur (7), ledit micro-commutateur envoie un signal de commande audit dispositif de commande (62) pour déclencher une procédure de détection d'une position de fin de course pour ledit motoréducteur,
et **en ce que** :
lorsque lesdits moyens d'actionnement (150) passent de ladite position (B) couplée à, à ladite position (A) découplée dudit micro-commutateur (7), ledit micro-commutateur envoie un signal de commande audit dispositif de commande (62) pour arrêter ladite procédure de détection et mémoriser la position de fin de course détectée au moyen de ladite procédure de détection.

3. Dispositif d'actionnement selon une ou plusieurs des revendications précédentes, **caractérisé en ce que** lesdits moyens d'actionnement (150) sont logés au moins partiellement dans ladite partie de tête (4).

4. Dispositif d'actionnement selon une ou plusieurs des revendications précédentes, **caractérisé en ce que** ledit second élément d'actionnement (19B) comprend une surface de couplage (21) avec ledit premier élément d'actionnement (19A), ledit moyen d'actionnement comprenant un élément de verrouillage (13) ayant une surface de verrouillage (31A, 31B, 32A) pouvant être couplé audit second élément d'actionnement (19B).

5. Dispositif d'actionnement selon la revendication 4, **caractérisé en ce que** lesdits premier et second éléments d'actionnement (19A, 19B) sont mobiles, de manière réversible, le long des axes de mouvement (101, 102) sensiblement perpendiculaires entre eux.

6. Dispositif d'actionnement selon une ou plusieurs des revendications 4 à 5, **caractérisé en ce que** ledit premier élément d'actionnement (19A) comprend :
- un poussoir (16) comprenant une première surface de couplage (160) avec ledit micro-commutateur (7) et une deuxième surface de couplage (21) avec ledit second élément d'actionnement (19B) ;
- un premier moyen élastique (17) associé de manière opérationnelle avec ledit poussoir.

7. Dispositif d'actionnement selon une ou plusieurs des revendications 4 à 6, **caractérisé en ce que** ledit second élément d'actionnement (19B) comprend :
- une glissière (11) comprenant une troisième surface de couplage (20) avec ledit premier élément d'actionnement (19A) ;
- un second moyen élastique (14) associé de manière opérationnelle avec ladite glissière ;
- une tige (41) comprenant une cinquième et une sixième surface de couplage (42, 43) avec ledit élément de verrouillage (13, ladite tige étant raccordée de manière solidaire avec ladite glissière ;
- un bouton poussoir (15) raccordé de manière solidaire avec ladite tige et pouvant être actionné manuellement par un utilisateur.

8. Dispositif d'actionnement selon une ou plusieurs des revendications 4 à 7, **caractérisé en ce que** ledit élément de verrouillage (13) est associé de manière coulissante avec ledit second élément d'actionnement (19B), ledit élément de verrouillage pouvant tourner librement autour dudit second axe de mouvement (102) et en position fixe par rapport audit second élément d'actionnement (19B).

9. Dispositif d'actionnement selon les revendications 7 et 8, **caractérisé en ce que** ledit élément de verrouillage (13) comprend une septième surface de verrouillage (32a), pouvant être couplée à la sixième surface de couplage (43) de ladite tige (41) et une huitième surface de verrouillage (31A, 31B), pouvant être couplée avec la cinquième surface de couplage (42) de ladite tige.

10. Dispositif d'actionnement selon une ou plusieurs des revendications 7 à 9, **caractérisé en ce que** ledit bouton poussoir (15) fait saillie de ladite partie de tête (4), lorsque ledit second élément d'actionnement (19B) est dans ladite position couplée (B2).

11. Barrière **caractérisée en ce qu'**elle comprend un dispositif d'actionnement (1) selon une ou plusieurs des revendications précédentes.
